# EUROPÄISCHE PATENTSCHRIFT

(11) **EP 1 849 665 B1**
(45) Veröffentlichungstag und Bekanntmachung des Hinweises auf die Patenterteilung: **17.11.2010**
(21) Anmeldenummer: 07007967.8
(22) Anmeldetag: 19.04.2007
(51) Int. Cl.: B60R 25/00

(54) **Systemarchitektur für ein Keyless-Go-System**
System architecture for a keyless-go system
Architecture de système pour keyless-go-system

(30) Priorität: 27.04.2006 DE 102006019572
(43) Veröffentlichungstag der Anmeldung: 31.10.2007
(73) Patentinhaber: Marquardt GmbH, 78604 Rietheim-Weilheim (DE)
(72) Erfinder: Hipp, Uwe, 72514 Inzigkofen-Engelwies (DE); Stehle, Wolfgang, 78603 Renquishausen (DE); Geber, Michael, 73773 Aichwald (DE); Reinhardt, Matthias, 71067 Sindelfingen (DE); Ruther, Markus, 73760 Ostfildern (DE)
(74) Vertreter: Otten, Herbert

(56) Entgegenhaltungen:
- DE-A1-102005 017 458
- DE-B3-102004 039 835

## Beschreibung

Die Erfindung betrifft eine Systemarchitektur für eine Gruppe von Verkehrsmitteln, welche bei einer ersten Ausstattungsvariante einen Funkempfänger mit einer zugeordneten Funkantenne und ein Steuergerät zur Berechtigungsprüfung für einen Funkschlüssel aufweist, wobei das Steuergerät mit dem Funkempfänger über eine Datenleitung verbunden ist, über die in einer Berechtigungsnachricht Zugangs- und/oder Berechtigungscodes des Funkschlüssels vom Funkempfänger zum Steuergerät übertragen werden, so dass bei Berechtigung ein Öffnen der Türen des Verkehrsmittels möglich ist.

Aus der DE 10 2004 007 721 A9 ist ein Steuerungssystem für ein Kraftfahrzeug bekannt. Das Steuerungssystem umfasst eine erste Einrichtung zur Ausübung wenigstens einer Steuerfunktion im Kraftfahrzeug sowie wenigstens ein Steuergerät zur Ausübung einer weiteren Funktion im Kraftfahrzeug. Die erste Einrichtung sowie das Steuergerät sind miteinander zur Übertragung von Signalen in einem Bordnetz angeordnet.

Aus der DE 10 2005 017 458 A1 ist ein Verfahren zum Betrieb eines Schließsystems, insbesondere für die Zugangs- und/oder Fahrberechtigung bei einem Kraftfahrzeug in der Art einer Keyless-Entry/Go-Funktionalität bekannt. Das Schließsystem umfasst eine wenigstens zwei Zustände besitzende, als Steuereinrichtung ausgebildete erste Einrichtung, wie eine Steuereinrichtung zur Ent- und/oder Verriegelung der Autotüren, des Zündschlosses, der Lenkradverriegelung, zur Freigabe und/oder Sperrung der Wegfahrsperre, des Motorsteuergeräts oder dergleichen, und eine zugehörige, in der Art eines elektronischen Schlüssels, eines ID-Gebers, einer Chipkarte oder dergleichen ausgebildete zweite Einrichtung. Zwischen den beiden Einrichtungen werden zu deren bestimmungsgemäßen Betrieb Signale übertragen. Bei wenigstens einem der übertragenen Signale kann es sich um ein codiertes Betriebssignal zur Authentifikation der zweiten Einrichtung handeln, so dass nach positiver Auswertung des übertragenen Betriebssignals bei berechtigter zweiter Einrichtung eine Änderung des Zustandes der ersten Einrichtung bewirkt wird. Weiter wird in der zweiten Einrichtung die Feldstärke für wenigstens zwei orthogonal aufeinander stehende Komponenten eines von der ersten Einrichtung übertragenen Bereichsabgrenzungssignals gemessen. In der zweiten Einrichtung wird anhand der gemessenen Feldstärken der Standort der zweiten Einrichtung in Bezug auf die erste Einrichtung in der Art eines Bereichs ermittelt.

Die Aufgabe der vorliegenden Erfindung besteht darin, eine Systemarchitektur für ein Keyless-Go-System derart weiterzubilden, dass diese in der Basisausstattung der Baureihe und in der Sonderausstattung der Baureihe jeweils mit einer Funkantenne auskommt. Die Systemarchitektur der Basisversion, soll ohne größere Änderung bzgl. der beteiligten Komponenten im Wesentlichen durch Erweiterung des Sonderausstattungs-Steuergerätes für Keyless-Go ausrüstbar sein.

Diese Aufgabe wird erfindungsgemäß durch die Merkmale des Anspruchs 1 gelöst. Danach ist bei einer anderen Ausstattungsvariante (der Sonderausstattung) des Verkehrsmittels mit Keyless-Go-System zusätzlich ein Keyless-Go-Steuergerät vorgesehen ist, das über die Datenleitung mit dem Funkempfänger verbunden ist und zusätzlich ist ein Datenbus zwischen dem Steuergerät und dem Keyless-Go-Steuergerät vorgesehen ist, und das Keyless-Go-Steuergerät empfängt bei der Ausstattungsvariante mit Keyless-Go die Keyless-Go-Berechtigungscodes in einer Keyless-Go-Nachricht und übernimmt die Steuerung der Keyless-Go-Funktion, und das Keyless-Go-Steuergerät ist bei der ersten Ausstattungsvariante im Verkehrsmittel nicht eingebaut. Bei der erfindungsgemäßen Ausbildung benötigt das Keyless-Go-Steuergerät keinen eigenen Funkempfänger wie beim Stand der Technik.

Bevorzugt wird der eine Funkempfänger der Basisausstattung zur Umrüstung bei der Sonderausstattung über die schnelle Datenleitung mit dem Keyless-Go-Steuergerät verknüpft. Zur Einsparung eines weiteren Funkempfängers werden die Steuerungsprozesse, welche nicht zeitkritisch sind und daher nicht im Keyless-Go-Steuergerät berücksichtigt werden über den CAN-Datenbus zu einem SAM-(Sensor-Aktor-Modul)-Steuergerät übertragen, um dort ausgehend vom Sensor-Aktor-Modul die Aktoren für die Entriegelung der Tür bzw. die Berechtigungsanfrage für das elektronische Zündschloss durchzuführen.

Durch die spezielle Ausführung der Systemarchitektur mit der speziellen digitaltechnischen Datenleitung zwischen Funkempfänger und dem dazugehörigen Steuergerät in beiden Ausstattungsvarianten und der zusätzlichen Ausstattung mit dem CAN-Datenbus zwischen Keyless-Go-Steuergerät und dem SAM-Steuergerät bzw. dem EZS-(Elektronisches Zündschloss)-Steuergerät können die besonders schnell erforderlichen Berechtigungsanfragen vor dem Keyless-Go-Steuergerät durchgeführt werden und die spezifischen Reaktionen an den einzelnen Aktoren am SAM-Steuergerät bzw. am EZS-Steuergerät durchgeführt werden. Da die Datenleitung vom Funkempfänger in beiden Ausstattungsvarianten vorhanden ist, lediglich in der Basisausstattung am SAM-Steuergerät oder am EZS-Steuergerät angekoppelt wird, während in der Keyless-Go Ausstattung die Datenleitung am Keyless-Go-Steuergerät angekoppelt wird, und dieses wiederum über den CAN-Datenbus mit den übrigen Steuergeräten vernetzt wird, lässt sich die Systemarchitektur für die Basisausstattung stark vereinfachen. Die spezielle Ausstattung für Keyless-Go wird zusätzlich in einem Keyless-Go-Steuergerät Hardware- und Software-technisch umgesetzt.

Ein besonderer Vorteil der speziellen Systemarchitektur für die verschiedenen Ausstattungsvarianten besteht aber darin, dass im Gegensatz zum Stand der Technik sowohl bei der Basisausstattung als auch bei der Keyless-Go Ausstattung jeweils nur ein Funkempfänger mit einer zugeordneten Antenne erforderlich ist. Dabei erfolgt die Berechtigungsprüfung für das Keyless-Go-System bevorzugt dadurch, weil zwischen Funkempfänger und Keyless-Go-Steuergerät eine direkte Datenleitung vorhanden ist. Unter Verwendung der Steuergeräte der Basisausstattung werden dann ohne Änderung der Hardware die Keyless-Go-Komponenten angekoppelt. Die Veränderungen erfolgen über die angepassten Nachrichten des CAN-Datenbusses und über veränderte Software-Module auf den Steuergeräten.

Bei der Keyless-Go Ausstattungsvariante des Verkehrsmittels wird eine vom Funkempfänger erfasste Funkinformation als Berechtigungsnachricht auf der Datenleitung übertragen, um im Keyless-Go-Steuergerät die Zugangs- und/oder Berechtigungscodes des Funkschlüssels oder der Chipkarte zu überprüfen.

Die Systemarchitektur weist bevorzugt in der Basisversion ein elektronisches Zündschloss-Steuergerät (EZS) und ein Sensor-Aktor-Modul-Steuergerät (SAM) auf. Die Steuergeräte sind über einen CAN-Datenbus vernetzt. Zusätzlich wird in der Keyless-Go-Ausstattungsvariante ein weiteres Zubehörsteuergerät als Keyless-Go-Steuergerät verbaut und über den CAN-Datenbus mit den vorgenannten Steuergeräten mit der Basisausstattung vernetzt. Dabei ist keine Änderung der Hardware der Steuergeräte aus der Basisausstattung erforderlich bzw. nur eine geringe Änderung im Bereich des SAM-Steuergeräts, soweit zusätzliche Aktoren und Sensoren angeschlossen werden. Die eigentliche Veränderung erfolgt in der Übertragung einer zusätzlichen Keyless-Go Nachricht über den CAN-Datenbus, welche von den Steuergeräten der Basisausstattungsvariante gelesen werden und dort neu aufgespielte Softwaremodule für die Sonderausstattung Keyless-Go verarbeitet werden.

Neben der Steuergerätevernetzung über den CAN-Datenbus oder alternativ auch den LIN-Datenbus wird das Keyless-Go-Steuergerät mit dem Funkempfänger über eine separate digitale Datenleitung vernetzt. Diese Datenleitung ist in der Basisausstattung mit einem der beiden Steuergeräte der Basisversion verbunden und wird in der Keyless-Go Ausstattungsvariante mit dem Keyless-Go-Steuergerät verbunden.

Bei der erfindungsgemäßen Systemarchitektur ist lediglich ein Funkempfänger in der Keyless-Go-Version erforderlich und der derselbe Funkempfänger wird in der Basisversion zur Berechtigungsabfrage des elektronischen Schlüssels für die Keyless-Entry-Funktion verwendet. Es muss also für die Sonderausstattung nicht zusätzlich eine Keyless-Go-Antenne angebracht werden, sondern es kann die Antenne der Basisversion verwendet werden, die lediglich dann mit dem Keyless-Go-Steuergerät zu verbinden ist. Diese Art der Systemarchitektur führt zu einer besonders effektiven Nutzung der schon bei der Basisversion vorhandenen Steuergeräte und für die Sonderausstattung Keyless-Go ist lediglich das zusätzliche Keyless-Go-Steuergerät und die Anbindung an den CAN-Datenbus erforderlich. Auf diese Weise kann mit der erfindungsgemäßen Systemarchitektur eine besonders kostengünstige Lösung für die Keyless-Go-Sonderausstattung produzieren, die zudem auch später noch nachgerüstet werden kann.

Bei der Keyless-Go-Ausstattungsvariante wird die Berechtigungsnachricht mit Zugangs- und/oder Berechtigungscodes des Funkschlüssels vom Funkempfänger zum Keyless-Go-Steuergerät übertragen und zusätzlich werden die Keyless-Go-Berechtigungscodes in einer Keyless-Go-Nachricht auf dem CAN-Datenbus weiter zum SAM-Steuergerät bzw. zum EZS-Steuergerät übertragen. Dadurch wird eine besonders schnelle Reaktionszeit für die Keyless-Entry-Funktion mit dem Funkschlüssel im Scheckkartenformat ermöglicht, da die Signale vom Funkempfänger in Echtzeit zum Keyless-Go-Steuergerät übertragen werden. Die Berechtigungsprüfung kann bereits erfolgen, während die übrigen Steuergeräte in der Basisausstattungsvariante noch mit der Initialisierung beim Hochfahren aus dem Stand-by-Modus beschäftigt sind. Das Keyless-Go-Steuergerät kann vorteilhaft auch durch die Übertragung vom Funkempfänger über die Datenleitung bereits geweckt werden. Dadurch hat das Gesamtsystem mit dem CAN-Datenbus unter Echtzeitbedingungen beim Startvorgang länger Zeit, da die Berechtigungsprüfung für das Keyless-Entry-System und die Übertragung über den Funkempfänger bereits vorher abgewickelt sind.

In der Basisversion ermöglicht der Funkschlüssel in Form eines drahtlosen elektronischen Schlüssels das Öffnen der Türen während dieser bei der Keyless-Go-Ausstattungsvariante auch gleichzeitig die Startberechtigung für den Motorstart freigibt, so dass der Motor des Verkehrsmittels ohne Schlüssel gestartet werden kann. Bei dieser Keyless-Go-Ausstattungsvariante kann der Funkschlüssel auch als Scheckkarte ausgeführt werden, so dass sich bei Berühren der Türgriffe die Tür sofort öffnen lässt.

Die vorliegende Erfindung wird im Folgenden unter Bezug auf die beigefügte Zeichnungen näher beschrieben. Es zeigen in schematischer Darstellung:

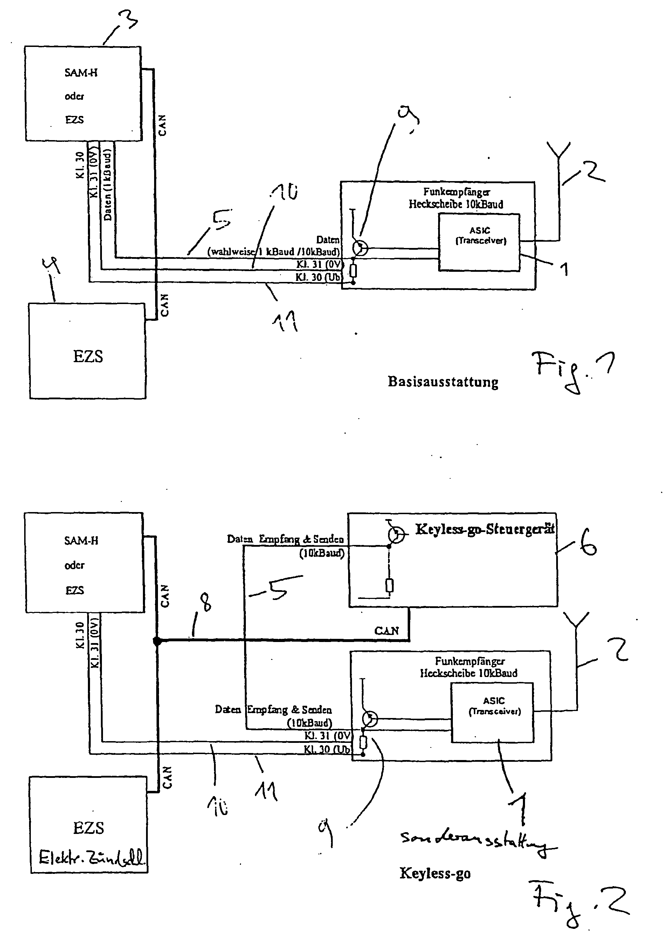

- Fig. 1: die erfindungsgemäße Systemarchitektur in der Basisausstattung eines Verkehrsmittels und
- Fig. 2: die erfindungsgemäße Systemarchitektur für den Keyless-Go Betrieb als Sonderausstattung des bereits in Figur 1 gezeigten Verkehrsmittels.

In der Basisausstattung weist die Systemarchitektur des Verkehrsmittels einen Funkempfänger 1 mit einem zugeordneten Transceiver und einer daran angekoppelten Antenne 2 auf. Die über die Antenne 2 empfangenen Signale werden im Transceiver 1 in digitale Signale gewandelt, so dass diese über eine Datenleitung 5 zum Steuergerät mit Sensor-Aktor-Modul 3 übertragen werden können. Das Sensor-Aktor-Steuergerät 3 ist über einen CAN-Datenbus mit dem elektronischen Zündschloss-Steuergerät 4 zur Datenübertragung verbunden.

Der Funkempfänger 1 setzt die hochfrequenten Antennensignale durch Demodulation in niederfrequentere Informationen um, die mit einer Transistorschaltung 9 in binäre Impulse umgesetzt werden. Im einfachsten Fall ist der Funkempfänger 1 über die Spannungsversorgungsleitungen 10 und 11 mit Batteriespannung versorgt. Bevorzugt kann der Funkempfänger 1 über die Leitungen 10 und 11 mit Batteriespannung und Massepotential versorgt werden, die von einem der Steuergerät 3 oder 4, bevorzugt von dem SAM-Steuergerät 3 bereit gestellt werden. Damit lässt sich der Funkempfänger 1 über das SAM-Steuergerät 3 in der Basisausstattung an- bzw. abschalten. Das EZS-Steuergerät 4 enthält die Steuerung für den Zündschlüssel und die dazugehörigen Aktoren bzw. die Steuermittel für die Wegfahrsperre des Fahrzeugs. Das SAM-Steuergerät 3 versorgt eine Vielzahl von Sensoren und Aktoren mit der notwendigen Spannung und steuert diese an. Im SAM-Steuergerät 3 sind auch die Sicherungen für die verschiedenen Aktoren vorgesehen.

Bei der Basisausstattung eines Verkehrsmittels wird der Nutzer mit einem elektronischen Funkschlüssel in den Empfangsbereich des Verkehrsmittels gelangen, welcher etwa zwischen 0 und 30 Metern um das Verkehrsmittel liegt. Bei Betätigung der Bedientaste auf dem Funkschlüssel mit der Bezeichnung "Tür öffnen" wird ein bestimmtes Signal ausgesendet und über die Antenne 2 vom Funkempfänger 1 empfangen. Die empfangenen Signale werden über den Transceiver in binäre Signale gewandelt und zum SAM-Steuergerät 3 bzw. EZS-Steuergerät 4 übertragen. In Folge dessen hat der Nutzer die Möglichkeit die Türen des Fahrzeugs zu öffnen und unter Verwendung des Schlüssels, welchen er im Zündschloss einsteckt das Verkehrsmittel zu starten.

Bei einer weiteren Ausstattungsvariante mit Keyless-Go-System wird nun die Systemarchitektur der Basisausstattung beibehalten und unter Ergänzung eines Keyless-Go-Steuergeräts 6 mit der notwendigen Software erweitert. Das Keyless-Go-Steuergerät 6 weist zusätzlich einen CAN-Transceiver auf, um mit den Steuergeräten 3 und 4 der Basisausstattung über den CAN-Datenbus 8 vernetzt zu werden. Im Gegensatz zur Basisausstattung wird jedoch die spezielle Datenleitung 5 nicht am SAM-Steuergerät 3 angesteckt, sondern an einer Schnittstelle im Keyless-Go-Steuergerät 6 vorgesehen. Im Gegensatz zum Stand der Technik wird bei der Keyless-Go-Ausstattung gemäß der vorliegenden Erfindung kein weiterer Funkempfänger 1 bei der Keyless-Go Version installiert. Es wird lediglich der bereits verbaute Funkempfänger der Basisausstattung weiterverwendet und die Signale werden dem Keyless-Go-Steuergerät 6 zugeführt. Im Keyless-Go-Steuergerät werden dann sämtliche Funktionen und Prozesse durchgeführt, welche in der Basisausstattung nicht erforderlich sind und welche zeitkritisch sind.

In Folge dessen wird die Berechtigungsabfrage für das Keyless-Go-System im Keyless-Go-Steuergerät 6 durchgeführt. Auch kann dort die Berechtigung für das Starten des Fahrzeugs zusätzlich schon geprüft werden. Während der Berechtigungsprüfung kann das Datenbussystem 8 mit den Steuergeräten 3 und 4 noch im Hochfahren begriffen sein, da der Initialisierungsprozess am CAN-Datenbus 8 wegen der vielen vernetzten Funktionen zeitlich länger dauert, als das lokale Wecken des Keyless-Go-Steuergeräts 6.

Der besondere Vorteil der vorliegenden Systemarchitektur besteht darin, dass ein Funkempfänger mit einer einzigen Antenne 2 für beide Ausstattungsvarianten verwendet werden kann und je nach Ausstattung der Funkempfänger entweder an einem Basissteuergerät 3 oder an einem Keyless-Go-Sonderausstattungssteuergerät 6 angesteckt wird. Auf diese Weise lassen sich die Systemarchitekturen für die Basisausstattung möglichst einfach aufbauen und bei der Keyless-Go-Sonderausstattung werden lediglich ein zusätzliches Steuergerät 6 und ein Anschluss an den CAN-Datenbus mittels CAN-Transceiver erforderlich. Auf diese Weise führt die vorliegende Erfindung zu einer besonders effektiven und kostengünstigen Ausstattung bei verschiedenen Varianten bezüglich Keyless-Go- und Keyless-Entry-System.

## Patentansprüche

1. Systemarchitektur für eine Gruppe von Verkehrsmitteln, welche bei einer ersten Ausstattungsvariante einen Funkempfänger (1) mit einer zugeordneten Funkantenne (2) und ein Steuergerät (3, 4) zur Berechtigungsprüfung für einen Funkschlüssel (7) aufweist, wobei das Steuergerät (3, 4) mit dem Funkempfänger (1) über eine Datenleitung (5) verbunden ist, über die in einer Berechtigungsnachricht Zugangs- und/oder Berechtigungscodes des Funkschlüssels vom Funkempfänger (1) zum Steuergerät (3, 4) übertragen werden, so dass bei Berechtigung ein Öffnen der Türen des Verkehrsmittels möglich ist,
**dadurch gekennzeichnet, dass**
bei einer anderen Ausstattungsvariante der Verkehrsmittel mit Keyless-Go-System zusätzlich ein Keyless-Go-Steuergerät (6) vorgesehen ist, das über die Datenleitung (5) mit dem Funkempfänger (1) verbunden ist und zusätzlich ein Datenbus (8) zwischen dem Steuergerät (3, 4) und dem Keyless-Go-Steuergerät (6) vorgesehen ist, und dass das Keyless-Go-Steuergerät (6) bei der Ausstattungsvariante mit Keyless-Go die Keyless-Go-Berechtigungscodes in einer Keyless-Go-Nachricht empfängt und die Steuerung der Keyless-Go-Funktion übernimmt, und dass das Keyless-Go-Steuergerät (6) bei der ersten Ausstattungsvariante im-Verkehrsmittel nicht eingebaut ist.

2. Systemarchitektur nach Anspruch 1,
**dadurch gekennzeichnet, dass**
bei der anderen Ausstattungsvariante der Verkehrsmittel mit Keyless-Go-System eine Berechtigungsnachricht auf der Datenleitung (5) vorgesehen ist, in der Zugangs- und/oder Berechtigungscodes des Funkschlüssels vom Funkempfänger (1) zum Keyless-Go-Steuergerät (6) übertragen werden, und dass Keyless-Go-Steuergerät (6) ein Mittel zur Prüfung der Berechtigung aufweist oder die Zugangs- und/oder Berechtigungscodes zur Prüfung an das Steuergerät (3, 4) über den Datenbus (8) überträgt.

3. Systemarchitektur nach Anspruch 1 oder 2,
**dadurch gekennzeichnet, dass**
die Funkantenne (2) für das Keyless-Go-Steuergerät (6) mit dem Funkempfänger (1) direkt verbunden ist und dass die Antennensignale vom Funkempfänger (1) über die Datenleitung zum Keyless-Go-Steuergerät (6) übertragen werden.

4. Systemarchitektur nach einem der Ansprüche 1 bis 3,
**dadurch gekennzeichnet, dass**
das Keyless-Go-Steuergerät (6), das Steuergerät (3, 4) und ein Zündschloss- oder Steuergerät mit Sicherungen und Endstufen für Aktoren über den Datenbus (8) miteinander vernetzt sind.

5. Systemarchitektur nach einem der Ansprüche 1 bis 4,
**dadurch gekennzeichnet, dass**
bei der Ausstattungsvariante mit Keyless-Go die Berechtigungsnachricht mit Zugangs- und/oder Berechtigungscodes des Funkschlüssels (7) vom Funkempfänger (1) zum Keyless-Go-Steuergerät (6) übertragen wird und zusätzlich die Keyless-Go-Berechtigungscodes in einer Keyless-Go-Nachricht übertragen wird.

6. Systemarchitektur nach Anspruch 1,
**dadurch gekennzeichnet, dass**
der Funkschlüssel (7) bei der ersten Ausstattungsvariante das Öffnen der Türen ermöglicht, während dieser bei der anderen Ausstattungsvariante mit Keyless-Go auch die Startberechtigung für den Motorstart freigibt, so dass der Motor des Verkehrsmittels ohne Schlüssel gestartet werden kann.

7. Systemarchitektur nach Anspruch 1 oder 6,
**dadurch gekennzeichnet, dass**
der Funkschlüssel (7) bei der ersten Ausstattungsvariante ein elektronischer Schlüssel mit Betätigungstasten ist, wobei er bei der anderen Ausstattungsvariante als Code-Karte ausgeführt ist, so dass bei berühren des Türgriffs die Tür des Verkehrsmittels ohne zusätzlichen Schlüssel geöffnet werden kann.

8. Systemarchitektur nach einem der Ansprüche 1 bis 3,
**dadurch gekennzeichnet, dass**
die Tastensignale des Funkschlüssels (7) über den Funkempfänger (1) zum Keyless-Go-Steuergerät (6) übertragen werden.

9. Systemarchitektur nach einem der Ansprüche 1 bis 8,
**dadurch gekennzeichnet, dass**
der Transceiver im Funkempfänger (1) mindestes zwei separate Funkkanäle mit unterschiedlichen Frequenzbändern aufweist, um eine störungsresistente redundante Funkübertragung zu realisieren.

## Claims

1. System architecture for a group of vehicles, which comprises in a first embodiment variant a radio receiver (1) with an assigned radio aerial (2) and a control device (3, 4) for checking the authorisation for a radio key (7), wherein the control device (3, 4) is connected to the radio receiver (1) via a data line (5), by means of which in an authorisation message access and/or authorisation codes of the radio key are transmitted from the radio receiver (1) to the control device (3, 4), so that with authorisation it is possible to open the doors of the vehicle,
**characterised in that**
in a different embodiment variant of the vehicle with a keyless-go system in addition a keyless-go control device (6) is provided, which is connected via the data line (5) to the radio receiver (1) and in addition a data bus (8) is provided between the control device (3, 4) and the keyless-go control device (6), and **in that** the keyless-go control device (6) in the embodiment variant with keyless-go receives the keyless-go authorisation codes in a keyless-go message and takes over the control of the keyless-go function, and **in that** the keyless-go control device (6) is not installed in the vehicle in the first embodiment variant.

2. System architecture according to claim 1, **characterised in that** in a different embodiment variant of the vehicle with a keyless-go system an authorisation message is provided on the data line (5), in which the access and/or authorisation codes of the radio key are transmitted from the radio receiver (1) to the keyless-go control device (6), and **in that** the keyless-go control device (6) comprises a means of checking the authorisation or transmits the access and/or authorisation codes for checking to the control device (3, 4) via the data bus (8).

3. System architecture according to claim 1 or 2 **characterised in that** the radio aerial (2) for the keyless-go control device (6) is connected directly to the radio receiver (1), and **in that** the aerial signals are transmitted from the radio receiver (1) via the data line to the keyless-go control device (6).

4. System architecture according to any one of claims 1 to 3, **characterised in that** the keyless-go control device (6), the control device (3, 4) and an ignition lock or control device are interconnected with locks and power amplifiers for actuators via the data bus (8).

5. System architecture according to any one of claims 1 to 4, **characterised in that** in the embodiment variant with keyless-go the authorisation message with access and/or authorisation codes of the radio key (7) is transmitted from the radio receiver (1) to the keyless-go control device (6), and in addition the keyless-go authorisation codes are transmitted in a keyless-go message.

6. System architecture according to claim 1, **characterised in that** the radio key (7) in the first embodiment variant allows the doors to be opened, whereas the latter in a different embodiment variant with keyless-go also enables the start authorisation for starting the engine, so that the engine of the vehicle can be started without a key.

7. System architecture according to claim 1 or 6, **characterised in that** the radio key (7) in the first embodiment variant is an electronic key with actuating keys, wherein it is designed in the other embodiment variant as a code card, so that on contacting the door handle the door of the vehicle can be opened without an additional key.

8. System architecture according to any one of claims 1 to 3, **characterised in that** the key signals of the radio key (7) are transmitted via the radio receiver (1) to the keyless-go control device (6).

9. System architecture according to any one of claims 1 to 8, **characterised in that** the transceiver in the radio receiver (1) comprises at least two separate radio channels with different frequency bands, in order to achieve an interference-resistant redundant radio transmission.

## Revendications

1. Architecture de système pour un groupe de moyens de transport qui selon une première variante d'équipement comporte un récepteur radio (1) équipé d'une antenne radio (2) et d'un appareil de commande (3, 4) pour le contrôle de validité d'une clé radio (7),
- l'appareil de commande (3, 4) étant relié au récepteur radio (1) par une ligne de transmission de données (5) qui permet de transmettre les codes d'accès et/ou d'autorisation de la clé radio dans un message d'autorisation, du récepteur radio (1) vers l'appareil de commande (3, 4) pour permettre l'ouverture des portes du moyen de transport si elle est autorisée,
**caractérisée en ce que**
- selon une autre variante d'équipement des moyens de transport avec un système d'utilisation sans clé, en plus il est prévu un appareil de commande d'utilisation sans clé (6) relié par la ligne de transmission de données (5) au récepteur radio (1) et en plus un bus de données (8) relie l'appareil de commande (3, 4) et l'appareil de commande d'utilisation sans clé (6), et
- l'appareil de commande d'utilisation sans clé (6) dans cette variante d'équipement pour une utilisation sans clé, reçoit les codes d'autorisation d'utilisation sans clé dans un message d'utilisation sans clé et assure la commande de la fonction d'utilisation sans clé, et
- l'appareil de commande d'utilisation sans clé (6), n'est pas installé dans le moyen de transport dans le cas de la première variante d'équipement.

2. Architecture de système selon la revendication 1,
**caractérisée en ce que**
pour l'autre variante d'équipement, des moyens de transport avec un système d'utilisation sans clé, il est prévu un message d'autorisation sur la ligne de transmission de données (5) qui transmet les codes d'accès et/ou d'autorisation de la clé radio entre le récepteur radio (1) et l'appareil de commande d'utilisation sans clé (6), et
- l'appareil de commande d'utilisation sans clé (6) comporte un moyen pour contrôler l'autorisation ou transmet pour le contrôle les codes d'accès et/ou d'autorisation à l'appareil de commande (3, 4) par le bus de données (8).

3. Architecture de système selon la revendication 1 ou 2,
**caractérisée en ce que**
l'antenne radio (2) de l'appareil de commande d'utilisation sans clé (6) est directement reliée au récepteur radio (1), et
les signaux d'antenne sont transmis du récepteur radio (1) à l'appareil de commande d'utilisation sans clé (6) par la ligne de transmission de données.

4. Architecture de système selon l'une des revendications 1 à 3,
**caractérisée en ce que**
l'appareil de commande d'utilisation sans clé (6), l'appareil de commande (3, 4) et un appareil de commande ou de serrure de contact, sont reliés par le bus de données (8) avec des sécurités et des étages de puissance pour les actionneurs.

5. Architecture de système selon l'une des revendications 1 à 4,
**caractérisée en ce que**
dans une variante d'équipement pour l'utilisation sans clé, le message d'autorisation est transmis avec le code d'autorisation de la clé radio (7), du récepteur radio (1) à l'appareil de commande d'utilisation sans clé (6) et en plus les codes d'autorisation d'utilisation sans clé, sont transmis dans un message d'utilisation sans clé.

6. Architecture de système selon la revendication 1,
**caractérisée en ce que**
dans la première variante d'équipement, la clé radio (7) permet d'ouvrir les portes, alors que dans l'autre variante d'équipement avec une utilisation sans clé, elle permet également de libérer l'autorisation de démarrage du moteur de façon que le moteur du moyen de transport puisse être démarré sans clé.

7. Architecture de système selon l'une des revendications 1 ou 6,
**caractérisée en ce que**
dans la première variante d'équipement, la clé radio (7) est une clé électronique avec des touches d'actionnement et dans l'autre variante d'équipement, la clé est réalisée comme carte codée de façon qu'en touchant la poignée de la porte, on puisse ouvrir la porte du moyen de transport sans autre clé.

8. Architecture de système selon l'une des revendications 1 à 3,
**caractérisée en ce que**
les signaux des touches de la clé radio (7) sont transmis à l'appareil de commande d'utilisation sans clé (6) par le récepteur radio (1).

9. Architecture de système selon l'une des revendications 1 à 8,
**caractérisée en ce que**
l'émetteur-récepteur du récepteur radio (1) comporte au moins deux canaux radio distincts avec des bandes de fréquence différentes pour réaliser une transmission radio redondante insensible aux parasites.
